# EUROPEAN PATENT SPECIFICATION

(11) **EP 3 789 143 B1**
(45) Date of publication and mention of the grant of the patent: **25.12.2024**
(21) Application number: 18917360.2
(22) Date of filing: 04.05.2018
(51) Int. Cl.: B23C 3/02, B23B 35/00

(54) **FORWARD-REVERSE FEED HELICAL MILLING METHOD**
SPIRALFRÄSEN MIT VORWÄRTS-RÜCKWÄRTS-VORSCHUB
PROCÉDÉ DE FRAISAGE HÉLICOÏDAL À AVANCE VERS L'AVANT ET VERS L'ARRIÈRE

(43) Date of publication of application: 10.03.2021
(73) Proprietor: Dalian University Of Technology, Dalian, Liaoning 116024 (CN)
(72) Inventor: KANG, Renke, Dalian, Liaoning 116024 (CN); DONG, Zhigang, Dalian, Liaoning 116024 (CN); YANG, Guolin, Dalian, Liaoning 116024 (CN); ZHU, Xianglong, Dalian, Liaoning 116024 (CN); ZHOU, Ping, Dalian, Liaoning 116024 (CN); GAO, Shang, Dalian, Liaoning 116024 (CN); GUO, Dongming, Dalian, Liaoning 116024 (CN)
(74) Representative: Proi World Intellectual Property GmbH
(86) International application number: PCT/CN2018/085574
(87) International publication number: WO 2019/210505

(56) References cited:
- EP-A1- 3 006 176
- WO-A1-2012/029666
- WO-A1-2018/000009
- CN-A- 101 537 512
- CN-A- 101 657 284
- CN-A- 101 758 275
- CN-A- 106 061 660
- CN-U- 202 571 427
- DE-A1- 102015 013 247
- FR-A1- 3 057 795
- US-A1- 2015 050 095

## Description

### Technical Field

The present invention relates to the technical field of hole processing in the assembly of aerospace vehicle, in particular to a method for helical milling with forward-backward feeding according to the preamble of claim 1.

### Background Art

Composites are widely used in aerospace vehicle design, and hole processing problem of laminated structure of composite and metal is often encountered in the assembling process of aircraft. In the process of hole processing, there is usually no other support material on the back of the composite, in this case, delamination, tearing, burr and other processing defects often occur when the tool is cut from the back of the composite.

A common method of hole processing is drilling with a drill bit, which will produce a larger axial cutting force.

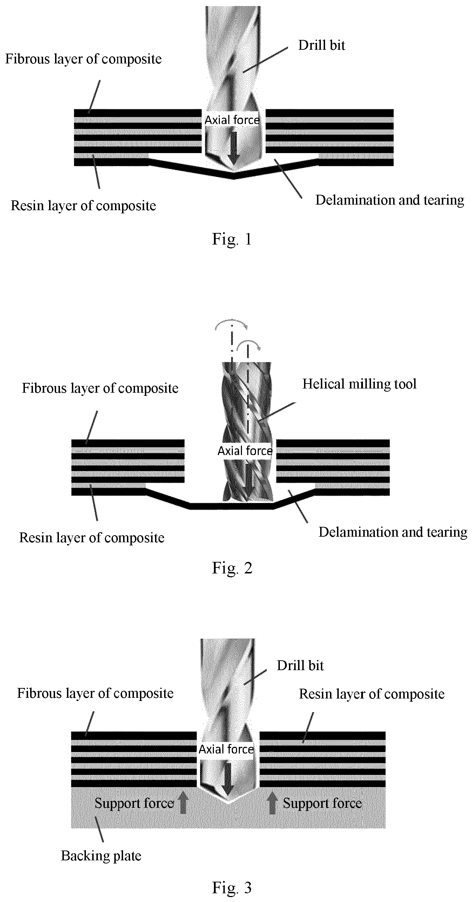

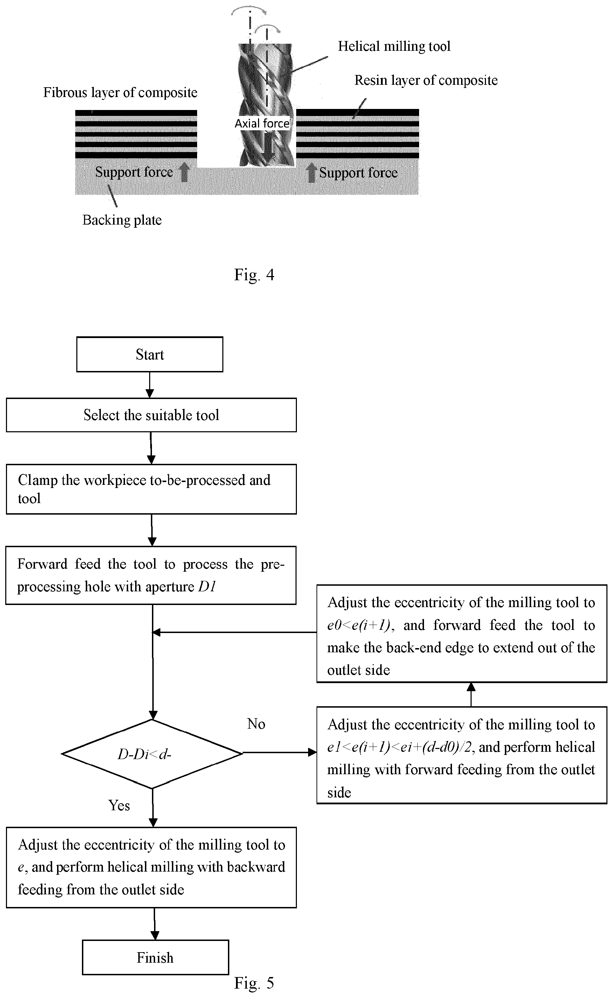

There is another hole processing method to use a special end milling tool to conduct helical milling, whose axial cutting force is smaller than drilling, but still exists. Composite is usually composed of multi-layer fibers, the resin matrix material with weak strength is usually between different fiber layers, and the axial force in processing is the main cause of the machining damage of composites, when the tool is cut from one side of the composite, the fiber layer close to the outlet side deforms under the action of axial cutting force of the tool, and the resin matrix between different layers is pulled apart, forming delamination, tearing and other processing defects, which affect the hole quality. The processing defects formed at the outlet side of the drill hole are shown in Fig. 1, and the processing defects formed at the outlet side of the helical milling are shown in Fig. 2. If a backing plate is added to the back end of the composite, when the tool cutting close to the outlet side of the composite, the fibrous layer closed to the outlet side will be supported by the backing plate without large deformation, and the resin matrix between the fibrous layers will not be destroyed, avoiding the processing defects such as delamination and tearing. Fig. 3 shows the case of drill hole with backing plate, and Fig. 4 shows the case of helical milling with backing plate. However, in actual production, in some cases, the composite cannot be added with backing plate during hole processing; in other cases, although the backing plate can be added when hole processing, but the installation and removal of the backing plate will greatly increase production costs and reduce production efficiency.

Therefore, for the hole processing of composite without back support, it is an urgent technical problem to realize defect free and high quality hole processing without backing plate.

US 2015/0050095 A1 discloses a method according to the preamble of claim 1 as well as a milling and boring tool with a tool shaft having a center axis, a geometrically defined rough cutter and a geometrically defined finishing cutter. The cutters each have a chip groove, wherein the chip groove of the finishing machining cutter has an opposite twist than the chip groove of the rough cutter.

### Summary of the Invention

According to the above technical problems, the present invention provides a method for helical milling with forward-backward feeding according to independent claim 1, so as to solve the problems such as easy lamination and tearing at the outlet of the composite and the disadvantage of time-consuming and laborious installation of backing plate. The present invention adopts the following technical solution:
A method for helical milling with forward-backward feeding, including the following steps:
S1. determining an aperture *D1* of a pre-processing hole;
S2. selecting a suitable tool according to a final aperture *D* of a through-hole to-be-processed and the aperture *D1* of the pre-processing hole;
S3. clamping a workpiece to-be-processed and the tool;
S4. feeding the tool forward to process the pre-processing hole with the aperture of *D1*, and *D1<D*, until a back-end cutting section of a cutting portion of the tool extends out of an outlet side of the workpiece; and
S5. adjusting an eccentricity of the tool one or more times, feeding backward from the outlet side, using the back-end cutting section of the cutting portion of the tool to perform helical milling to obtain a through-hole with aperture *D*.

The determination of the diameter *D1* of the pre-processing hole in step S1 includes: according to the aperture *D* of the through-hole to-be-processed, a radial one-side maximum width *K* of a damage area required by processing, and a radial one-side maximum width *K1* of a damage area produced by the pre-processing hole based on previous experiment data and production experience, wherein *D1* satisfies *D1<D+2*×*K-2*×*K1*, and the value of *D1* is determined according to the actual situation.

Preferred embodiments are defined by the dependent claims.

Compared with the prior art, the present disclosure has the following beneficial effects:
1. The present disclosure can avoid delamination, tearing and other defects of the composite beyond the processing requirements, and improve the processing quality. When the workpiece to-be-processed is a laminated structure including at least one layer of composite and at least one layer of metal material, in the process of machining pre-processing hole, there is no backing plate on the back of the composite, which may produce larger processing defects, but the defective material can be cut off in the process of subsequent helical milling with backward feeding, and no new processing defects will be produced in the process of helical milling with backward feeding. This is due to the change of the direction of axial force on the composite during the process of helical milling with backward feeding, the fibrous layer on the outlet side will not produce deformation that may lead to delamination and tearing. When the tool nears to the interface between the composite layer and the metal layer in backward feeding of helical milling, the mental layer can act as a backing plate, so that the fibrous layer of the composite here does not appear delamination, tearing and other defects;
   If the workpiece only contains composite, in the process of machining the pre-processing hole with helical milling, there is no backing plate on the back of the composite, which may produce larger processing defects, but the defective material can be cut off in the process of subsequent helical milling with backward feeding, and no new processing defects will be produced in the process of helical milling with backward feeding. When the tool helically mills with forward feeding to process the first half section (H1) of the processing-hole, the second half of the material can be used as the backing plate for the first half processing, so that the fiber layer of the composite here will not appear delamination, tearing and other defects; when helically mill the second half of the material with backward feeding, the direction of axial force on the composite is changed, and the first half of the material can be used as the backing plate for the second half processing, so that the fibrous layer of the composite here does not appear delamination, tearing and other defects.
2. The outlet side of the composite does not need extra backing plates, which saves on costs, simplifies the machining process and improves production efficiency.
3. The present disclosure reduced the difficulty of the tool design. When the front-end cutting section of the tool performs forward feeding processing, processing defects within a certain scale are allowed, which is equivalent to reducing the design requirements of the edge shape of the front-end cutting section of the tool and makes it easier to obtain usable tools.
4. The present disclosure can improve the life of the tool. When the front-end cutting section of the tool performs forward feeding processing, processing defects within a certain scale are allowed. Therefore, when the front-end cutting edge of the tool's front-end cutting section has a certain wear, the tool can continue to be used even if the processing quality decreases, until the resulting processing defects exceed the allowable value. When the back-end cutting section is used for helical milling in backward feeding, the metal layer or composite can act as the backing plate, therefore, even if some wear is produced, there will be no processing defects near the metal side of the composite.

Based on the above effects, the present disclosure can be widely used in the field of hole processing.

### Brief Description of the Drawings

The drawings illustrate related prior art as well as embodiments of the present disclosure and will be briefly introduced below.
Fig.1 is a schematic diagram of the formation of machining damage at the outlet side of composite under the existing drilling processing method in the background art of the present disclosure.
Fig.2 is a schematic diagram of the formation of machining damage at the outlet side of composite under the existing helical milling processing method in the background art of the present disclosure.
Fig. 3 is a schematic diagram of the inhibition of machining damage when there is a backing plate on the outlet side of composite under the existing drilling processing method in the background art of the present disclosure.
Fig. 4 is a schematic diagram of the inhibition of machining damage when there is a backing plate on the outlet side of composite under the existing helical milling processing method in the background art of the present disclosure.
Fig. 5 is a flow diagram of a method for helical milling with forward-backward feeding in the embodiments.
Fig. 6 is a structure diagram of the tool in embodiment 1 and embodiment 3 of the present disclosure.
Fig. 7 is a processing diagram in embodiment 1 of the present disclosure.
Fig. 8 is a comparison diagram of the processing effects between the final hole and the pre-processing hole by using the method disclosed in embodiment 1, the final hole was obtained by processing a laminated structure of composite and metal, and the pre-processing hole was obtained by helical milling the laminated structure with forward feeding from the inlet side at the first time.
Fig. 9 is a structure diagram of the tool in embodiment 2 of the present disclosure.
Fig. 10 is a processing diagram in embodiment 2 of the present disclosure.
Fig. 11 is a comparison diagram of the processing effects between the final hole and the pre-processing hole by using the method disclosed in embodiment 2, the final hole was obtained by processing a laminated structure of composite and metal, and the pre-processing hole was obtained by drilling the laminated structure with forward feeding from the inlet side for the first time.
Fig. 12 is a processing diagram in embodiment 3 of the present disclosure.
Fig. 13 is a comparison diagram of the processing effects between the final hole and the pre-processing hole by using the method disclosed in embodiment 3, the final hole was obtained by processing the composite, and the pre-processing hole was obtained by helical milling the composite with forward feeding from the inlet side at the first time.

### Detailed Description of the Preferred Embodiments

To make the objectives, technical solutions and advantages of the present disclosure clearer, a description of embodiments of the present disclosure is given herein after in combination with the accompanying drawings. Obviously, the described embodiments are a selection of the embodiments of the present disclosure, but not all of them.

Fig. 5 is a schematic diagram of a method for helical milling with forward-backward feeding, which is suitable for the processing of composite, metal and laminated material. The directional terms mentioned in the present disclosure, such as up, down, left, right, etc., only refer to the directions of the attached drawings. Therefore, the directional terms are used to illustrate rather than limit the present disclosure.

The present disclosure is applicable to the hole processing of laminated structure of composite and metal, and is also applicable to that of monolayer composite, composite lamination, monolayer metal, and metal lamination material, to avoid the machining defects such as burr and flash on the outlet side.

The composites mentioned in the present disclosure mainly refer to carbon fiber reinforced resin matrix composite, but also include other composites with different fibers and matrix materials. The metal material mainly includes but not limited to titanium alloy, aluminum alloy, high-strength steel and other metal materials.

The processing defects mentioned in the present disclosure include but not limited to delamination and tearing. The present disclosure is also applicable to other defects caused by the absence of backing plate at the outlet side, or other processing defects with the same characteristics as delamination and tearing but with different names.

### Embodiment 1

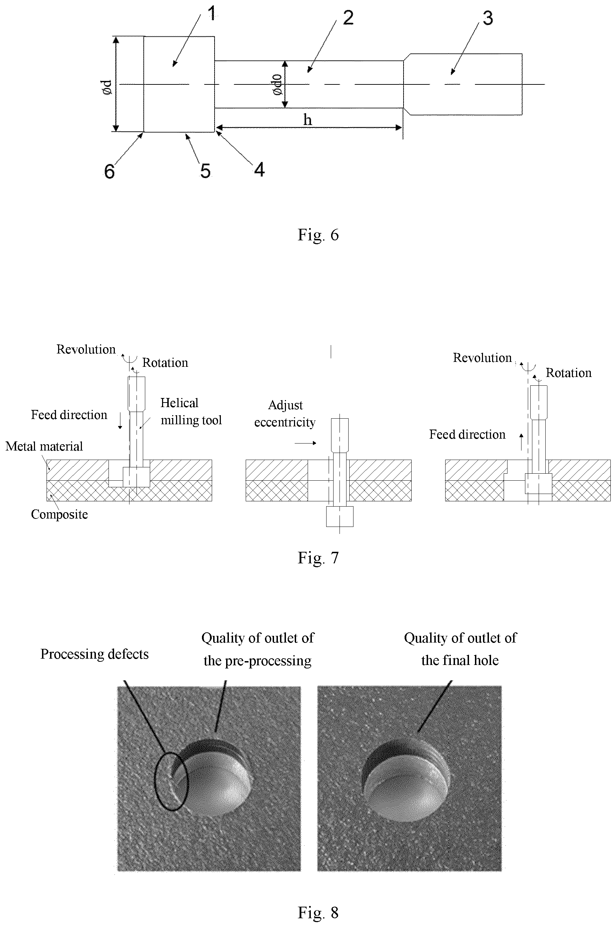

Fig. 6 and Fig.7 are respectively the tool structure diagram and processing diagram of a method for helical milling with forward-backward feeding. Fig. 8 is a comparison diagram of the processing effects between the final hole and the pre-processing hole by using the method disclosed in the embodiment, the final hole was obtained by processing a laminated structure of composite and metal, and the pre-processing hole was obtained by helical milling the laminated structure with forward feeding from the inlet side at the first time. The workpiece to-be-processed is a laminated structure of composite and metal, the aperture *D* of the through-hole to-be-processed is 14mm, the hole depth *H* of the through-hole to-be-processed is 20mm, the radical one-side maximum width *K* of the damage area required by processing is 0; and the method includes the following steps:
S1. An aperture *D1* of a pre-processing hole is determined:
   according to the aperture *D* (14mm) of the through-hole to-be-processed, the radial one-side maximum width *K* (0) of the damage area required by processing, and the radial one-side maximum width *K1* (0.5mm) of the damage area produced by helical milling the pre-processing hole based on the previous experiment data and production experience, *D1* satisfies D1<D+2×K-2×K1; according to the actual situation, *D1* is determined to be 12mm;
S2. A suitable tool is selected according to a final aperture *D* of the through-hole to-be processed and the aperture *D1* of the pre-processing hole;
   the tool includes a cutting portion 1, a neck portion 2 and a handle portion 3; the cutting portion includes a front-end cutting section 6, a circumferential cutting section 5 and a back-end cutting section 4; the front-end cutting section 6 is the end mill structure, the diameter *d* of the cutting portion 1 satisfies *0.5D<d<D1*, the diameter *d0* of the neck portion 2 satisfies *d0<d*, the length *h* of the neck portion satisfies *h>H;* when feed the tool forward until the back-end cutting section 4 of the cutting portion 1 of the tool extends out of the outlet side, the handle portion 3 does not enter the hole; the selected tool is *d*=8mm, *d*0=7mm, and *h*=30mm;
S3. The workpiece to-be-processed and the tool are clamped:
   the workpiece to-be-processed is a laminated structure, including a layer of composite and a layer of metal material; the tool is clamped on a device which can rotate and can revolve with a certain eccentricity, so that the axis of the tool is parallel to that of the through-hole to-be-processed;
S4. The tool is fed forward to process the pre-processing hole with aperture *D1* (*D1<D*), until the back-end cutting section 4 of the cutting portion 1 of the tool extends out of the outlet side;
   the front-end cutting section 6 of the cutting portion 1 of the selected tool is the end mill structure, the eccentricity *e1* of the tool is adjusted to *e1-(D1-d)*/*2=*2mm, a driving device drives the tool to helically mill with forward feeding from the inlet side to process the pre-processing hole with aperture *D1*, until the back-end cutting section 4 of the cutting portion 1 of the tool extends out of the outlet side; the driving device is a machining center, or a special equipment for helical milling with eccentricity automatic adjustment function, or other machining equipment which can drive the tool to realize the motion required in this embodiment.
S5. The eccentricity of the tool is adjusted one or more times, the tool is fed backward from the outlet side, and the through-hole with aperture *D* is helically milled by the back-end cutting section 4 of the cutting portion 1 of the tool; the specific steps are as followed:
   S51. When *D-D1=*2mm, *d-d0*=1mm*,* then *D-D1≥d-d0*, the eccentricity of the tool is adjusted to *e(1*+*1)*=2.4mm, satisfying *e1<e(1*+*1)<e1*+*(d-d0)*/*2*, the tool helically mills with backward feeding from the outlet side, a through-hole coaxial with the pre-processing hole is processed; the tool is fed to the outlet side along a helical path while it rotates at a high speed, and the helical milling is performed at the outlet side by using the back-end cutting section 4 of the cutting portion 1 of the tool. The eccentricity of the tool is adjusted to *e0*=2.3mm<*e*(*1*+*1*), the tool is fed forward to make the end cutting section 4 of the cutting portion 1 of the tool extend out of the outlet side;
   S52. When *D*-*D*2=1.2mm, *d*-*d0*=1mm, then *D-D2≥d-d0*, the eccentricity of the tool is adjusted to *e(2+1)*=2.7mm, satisfying *e2<e(2+1)<e2+(d-d0)*/*2*, the tool helically mills with backward feeding from the outlet side, a through-hole coaxial with the pre-processing hole is processed; the tool is fed to the outlet side along a helical path while it rotates at a high speed, and the helical milling is performed at the outlet side by using the back-end cutting section 4 of the cutting portion 1 of the tool, the eccentricity of the tool is adjusted to *e0*=2.3mm<*e(2*+*1)*, the tool is fed forward to make the end cutting section 4 of the cutting portion 1 of the tool extend out of the outlet side; and *D2* is the aperture of the outlet side obtained in step S51;
   S53. When *D-D3*=0.6mm, *d-d0=*1mm, then *D-D3<d-d0,* the eccentricity of the tool is adjusted to *e=(D-d)*/*2=*3mm*,* the tool helically mills with backward feeding from the outlet side, a hole with aperture D and coaxial with the pre-processing hole is processed, i.e. the through-hole to-be processed; *D3* is the aperture of the outlet side obtained in step S52.

### Embodiment 2

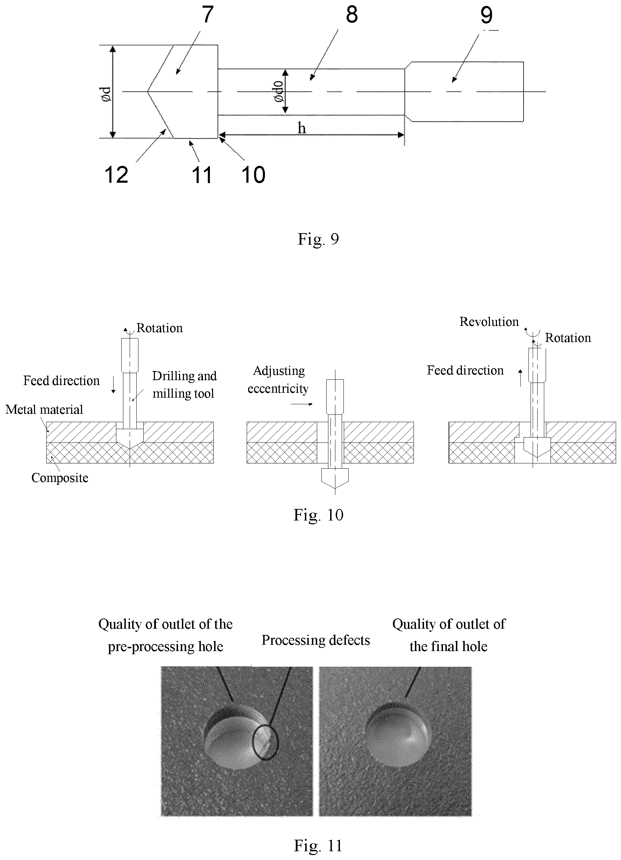

Fig. 9 and Fig.10 are respectively the tool structure diagram and processing diagram of a method for helical milling with forward-backward feeding. Fig. 11 is a comparison diagram of the processing effects between the final hole and the pre-processing hole by using the method disclosed in the embodiment, the final hole was obtained by processing composite and metal laminated structure, and the pre-processing hole was obtained by helical milling the laminated structure with forward feeding from the inlet side at the first time. The workpiece to-be-processed is a laminated structure of composite and metal, the aperture *D* of the through-hole to-be-processed is 14mm; the depth *H* of the through-hole to-be-processed is 20mm, the radial one-side maximum width *K* of the damage area required by processing is 0; and the method includes the following steps:
S1. An aperture *D1* of a pre-processing hole is determined: according to the aperture *D* (=14mm) of the through-hole to-be-processed, the radial one-side maximum width *K* (=0) of the damage area required by processing, and the radial one-side maximum width *K1* (=1mm) of the damage area produced by drilling the pre-processing hole based on the previous experiment data and production experience, *D1* satisfies *D1<D+2*×*K-*2×*K1*; according to the actual situation, *D1* is determined to be 10mm;
S2. A suitable tool is selected according to a final aperture *D* of the through-hole to-be processed and the aperture *D1* of the pre-processing hole;
   the tool includes a cutting portion 7, a neck portion 8 and a handle portion 9; the cutting portion includes a front-end cutting section 12, a circumferential cutting section 11 and a back-end cutting section 10; the front-end cutting section 12 is the drill bit structure, the diameter *d* of the cutting portion 7 satisfies *d=D1*, the diameter *d0* of the neck portion 8 satisfies *d0<d*, and the length *h* of the neck portion 8 satisfies *h>H;* when feeding the tool forward until the back-end cutting section 10 of the cutting portion 7 of the tool extends out to the outlet side, the handle portion 9 does not enter the hole; the selected tool is *d*=10mm, *d0*=8mm, and *h*=30mm;
S3. The workpiece to-be-processed and the tool are clamped:
   the workpiece to-be-processed is a laminated structure, including a layer of composite and a layer of metal material; the tool is clamped on a device which can rotate and can revolve with a certain eccentricity, so that the axis of the tool is parallel to that of the through-hole to-be-processed;
S4. The tool is fed forward to process the pre-processing hole with aperture *D1* (*D1<D*), until the back-end cutting section 10 of the cutting portion 7 of the tool extends out of the outlet side;
   the front-end cutting section 12 of the cutting portion 7 of the selected tool is the drill bit structure, the eccentricity *e1* of the tool is adjusted to *e1*=0*,* a driving device drives the tool to drill with forward feeding from the inlet side to process the pre-processing hole with aperture *D1*, until the back-end cutting section 10 of the cutting portion 7 of the tool extends out of the outlet side; the driving device is a machining center, or a special equipment for helical milling with eccentricity automatic adjustment function, or other machining equipment which can drive the tool to realize the motion required in this embodiment.
S5. The eccentricity of the tool is adjusted one or more times, the tool is fed backward from the outlet side, and the through-hole with aperture *D* is helically milled by the back-end cutting section 10 of the cutting portion 7 of the tool; the specific steps are as followed:
   S51. When *D*-*D1*=4mm, *d-d0=*2mm*,* then *D-D1*≥*d-d0*, the eccentricity of the tool is adjusted to *e(*1*+*1*)*=0.8mm, satisfying *e1<e(1+1)<e1+(d-d0)*/2, the tool helically mills with backward feeding from the outlet side, a through-hole coaxial with the pre-processing hole is processed; the tool is fed to the outlet side along a helical path while it rotates at a high speed, and the helical milling is performed at the outlet side by using the back-end cutting section 10 of the cutting portion 7 of the tool. The eccentricity of the tool is adjusted to *e0*=0.7mm<*e(1*+*1)*, the tool is fed forward to make the end cutting section 10 of the cutting portion 7 of the tool extend out of the outlet side;
   S52. when *D-D2*=2.4mm, *d-d0=*2mm, then *D-D2*≥*d-d0*, the eccentricity of the tool is adjusted to *e(2+1)*=1.6mm, satisfying *e2<e(2+1)<e2+(d-d0)*/*2*, the tool helically mills with backward feeding from the outlet side, a through-hole coaxial with the pre-processing hole is processed; the tool is fed to the outlet side along a helical path while it rotates at a high speed, and the helical milling is performed at the outlet side by using the back-end cutting section 10 of the cutting portion 7 of the tool, the eccentricity of the tool is adjusted to *e0-1.4mm<e(2+1),* the tool is fed forward to make the end cutting section 10 of the cutting portion 7 of the tool extend of the outlet side; and *D2* is the aperture of the outlet side obtained in step S51;
   S53. When *D-D2*=0.8mm, *d-d0=*2mm*,* then *D-D3<d-d0*, the eccentricity of the tool is adjusted to *e=(D-d)*/*2=*2mm*,* the tool helically mills with backward feeding from the outlet side, a hole with aperture *D* and coaxial with the pre-processing hole is processed, i.e. the through-hole to-be processed; *D3* is the aperture of the outlet side obtained in step S52.

### Embodiment 3

The workpiece to-be-processed contains only a monolayer composite, in order to avoid the new machining damage generated on the inlet side when helical mill with backward feeding from the outlet side, the embodiment is that the tool first helically mills a first half section of the processing-hole with forward feeding, then helically mills the second half section of the processing-hole with backward feeding. When backward feeding, the first half of the composite can be used as a backing plate, so that the fiber layer of the composite here does not appear defects such as delamination or tearing.

In this embodiment, a very small machining allowance can be maintained in the process of helically milling the first half section of the processing-hole with forward feeding and helically milling the second half section of the processing-hole with backward feeding, and then all of them are processed to the final aperture in one time by using helical milling, which can avoid producing the tool marks.

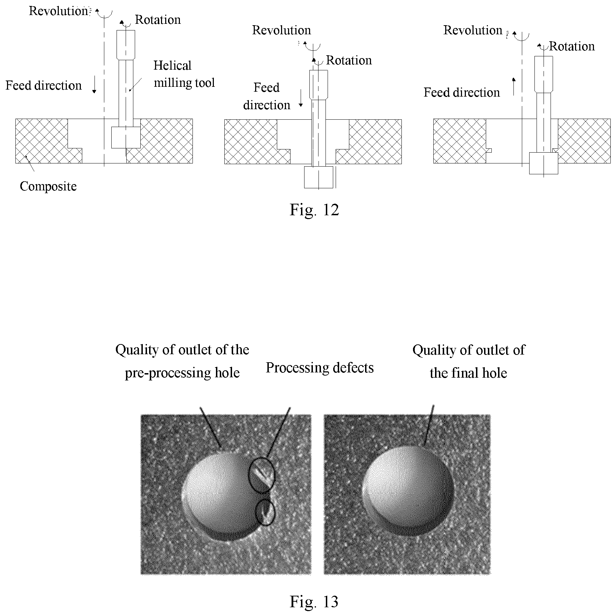

Fig. 6 and Fig. 12 are respectively the tool structure diagram and a processing diagram of method for helical milling with forward-backward feeding. Fig. 13 is a comparison diagram of the processing effects between the final hole and the pre-processing hole by using the method disclosed in the embodiment, the final hole was obtained by processing composite, and the pre-processing hole was obtained by helical milling with forward feeding from the inlet side at the first time. The workpiece to-be-processed is a monolayer composite, the aperture *D* of the through-hole to-be-processed is 16mm, the depth *H* of the through-hole to-be-processed is 20mm, the radial one-side maximum width *K* of the damage area required by processing is 0.5mm; and the method includes the following steps:
S1. An aperture *D1* of a pre-processing hole is determined:
   the calculation method of D1 is: according to the aperture *D* (=16mm) of the through-hole to-be-processed, the radial one-side maximum width *K* (=0.5mm) of the damage area required by processing and the radial one-side maximum width *K1* (=0.8mm) of the damage area produced by helical milling the pre-processing hole based on the previous experiment data and production experience, *D1* satisfies *D1<D+2*×*K-2*×*K1*; according to the actual situation, D1 is determined to be 14mm;
S2. A suitable tool is selected according to a final aperture *D* of the through-hole to-be processed and the aperture *D1* of the pre-processing hole;
   the tool is selected as: the tool includes a cutting portion 1, a neck portion 2 and a handle portion 3; the cutting portion 1 includes a front-end cutting section 6, a circumferential cutting section 5 and a back-end cutting section 4; the front-end cutting section 6 is the end mill structure, the diameter *d* of the cutting portion 1 is 8mm satisfying 0.5D<d<D1, the diameter *d0* of the neck portion 2 is 6mm satisfying *d0<d*, the length *h* of the neck portion 2 is 30mm; when feed the tool forward until the back-end cutting section 4 of the cutting portion 1 of the tool extends out of the outlet side, the handle portion 3 does not enter the hole;
S3. The workpiece to-be-processed and the tool are clamped:
   The workpiece to-be-processed is a monolayer composite structure; the tool is clamped on a device which can rotate and can revolve with a certain eccentricity, so that the axis of the toolis parallel to that of the through-hole to-be-processed;
S4. The tool is fed forward to process the pre-processing hole with aperture *D1* (D1<D), until the back-end cutting section 4 of the cutting portion 1 of the tool extends out of the outlet side;
   The eccentricity *e1* of the tool is adjusted to *e1=(D1-d)*/*2=*3mm (*d* is the diameter of the cutting portion 1 of the tool), a driving device drives the tool to helically mill with forward feeding from the inlet side to process the pre-processing hole with the aperture of *D1*; the driving device can be a machining center, or a special equipment for helical milling with an eccentricity automatic adjustment function, or other machining equipment which can drive the tool to realize the motion required in this embodiment; when helical milling, the tool rotates at a high speed and forward feeds until the back-end cutting section 4 is detached from the workpiece to-be-processed, meanwhile, ensure that the handle portion 3 does not enter the hole;
S5. The tool is fed backward until the front-end cutting section 6 of the cutting portion 1 of the tool quits the inlet side;
S6. When *d*=8mm, *(D-D1)*/2*=*1mm, then *d>(D-D1)*/*2*, the eccentricity of the tool is adjusted to *e=(D-d)*/2=4mm, a hole with aperture *D*=16mm, hole depth *H1*=14mm, and coaxial with the pre-processing hole is processed with forward feeding from the inlet side;
S7. the eccentricity of the tool is adjusted to *e0*=2.8mm<*e1*, the tool is fed forward until the end-end cutting section 4 of the cutting portion 1 of the tool extends out of the outlet side;
S8. the eccentricity of the tool is adjusted one or more times, the tool is fed forward from the outlet side, and the through-hole with aperture *D* is helical milled by the back-end cutting section 4 of the cutting portion 1 of the tool; and the specific steps are as followed:
   S81. when *D-D1*=2mm*, d-d0=*2mm*,* then *D-D1*=*d*-*d0*, the eccentricity of the tool is adjusted to *e(1*+*1)*=3.5mm satisfying *e1<e(1+1)<e1*+*(d-d0)*/*2*, the tool helically mills with backward feeding from the outlet side, a through-hole with hole depth *H*-*H1*=6mm and coaxial with the pre-processing hole is processed; the tool is fed to the outlet side along a helical path while it rotates at a high speed, and the helical milling is carried out on the outlet side by using the back-end cutting section 4 of the cutting portion 1 of the tool. The eccentricity of the tool is adjusted to *e0<e(1+1)*, the tool is fed forward to make the end cutting section 4 of the cutting portion 1 of the tool extends out of the outlet side;
   S82. When *D*-*D*2=1mm, *d-d0=*2mm, then *D-D2<d-d0*, the eccentricity of the tool is adjusted to *e*=*(D-d)*/2=4mm, the tool helically mills with backward feeding from the outlet side, a hole with aperture *D* and coaxial with the pre-processing hole is processed, i.e. the through-hole to-be processed; *D2* is the aperture of the outlet side obtained in step S81.

Finally, it should be stated that the above embodiments are only used to illustrate the present invention. Said embodiments may be modified within the scope of the invention defined by the appended claims.

## Claims

1. A method for helical milling with forward-backward feeding, comprising the following steps:
S1. determining an aperture *D1* of a pre-processing hole;
S2. selecting a suitable tool according to a final aperture *D* of a through-hole to-be-processed and the aperture *D1* of the pre-processing hole;
S3. clamping a workpiece to-be-processed and the tool;
S4. feeding the tool forward to process the pre-processing hole with the aperture *D1*, and *D₁<D*, until a back-end cutting section of a cutting portion of the tool extends out of an outlet side of the workpiece; and
S5. adjusting an eccentricity of the tool one or more times, feeding backward from the outlet side, using the back-end cutting section of the cutting portion of the tool to perform helical milling, obtaining a through-hole with aperture *D*, **characterized in that**
determining the aperture *D1* of the pre-processing hole in step S1 comprises: according to the aperture *D* of the through-hole to-be-processed, a radial one-side maximum width *K* of a damage area required by processing, and a radial one-side maximum width *K1* of a damage area produced by the pre-processing hole based on previous experiment data and production experience, wherein D1 satisfies:
*D1*<*D*+2×*K*-2×K1, and the value of D1 is determined according to the actual situation.

2. The method according to claim 1, wherein the tool in step S2 comprises a cutting portion, a neck portion and a handle portion; the cutting portion comprises a front-end cutting section, a circumferential cutting section and a back-end cutting section; the front-end cutting section is a structure of drill bit or end mill; if the front-end cutting section is the drill bit structure, a diameter *d* of the cutting portion satisfies *d*=*D1*; if the front-end cutting section is the end mill structure, the diameter *d* of the cutting portion satisfies 0*.*5*D<d<D1*; a diameter *d0* of the neck portion satisfies *d0<d*; a length *h* of the neck portion satisfies *h>H,* and *H* is a hole depth of the through-hole to-be-processed.

3. The method according to claim 2, wherein step S4 comprises the following steps:
if the front-end cutting section of cutting portion of the tool is drill bit structure, adjusting the tool coaxial with the through-hole to-be-processed, and feeding forward to process the pre-processing hole with the aperture *D1* until the back-end cutting section of cutting portion of the tool extending out of the outlet side; and
if the front-end cutting section of cutting portion of the tool is mill end structure, adjusting the eccentricity *e1* of the tool to *e1=(D1-d)*/*2*, driving the tool to helically mill with forward feeding to process the pre-processing hole with aperture *D1* from the inlet side until the back-end cutting section of cutting portion of the tool extending out of the outlet side; wherein, *d* is a diameter of the cutting portion of the tool.

4. The method according to claim 3, wherein step S5 comprises the following steps:
S51. if *D-Di<d-d0*, adjusting the eccentricity *e* of the tool to *e=(D-d)*/*2,* helically milling with backward feeding from the outlet side to process a hole with aperture *D* and coaxial with the pre-processing hole, to obtain the through-hole to-be-processed; wherein, *Di* is an aperture at the outlet side after the previous helical milling, *d* is the diameter of cutting portion of the tool, *d0* is a diameter of neck portion of the tool, and *i* = 1, 2, 3, 4...;
if *D-Di≥d-d0*, adjusting the eccentricity *e(i+1)* of the tool to satisfy *ei<e(i+1)<ei+(d-d0)*/*2*, helically milling with backward feeding from the outlet side to process a through-hole coaxial with the pre-processing hole; and adjusting the eccentricity to *e0<e(i+1)* and feeding forward to make the back-end cutting section of cutting portion of the tool to extend out of the outlet side; wherein, *Di* is the aperture at the outlet side after the previous helical milling, *d* is the diameter of cutting portion of the tool, *d0* is the diameter of neck portion of the tool, *e0* is a eccentricity required to make the back-end cutting section of the cutting portion of the tool extends out of the outlet side, *ei* is a eccentricity of the tool when the aperture at the outlet is *Di, e(i+1)* is a eccentricity of the tool in the present helical milling, and *i =* 1, 2, 3, 4...; and
S52. repeating step S51.

5. The method according to claim 1, wherein a driving device of the tool is a machining center, or a special equipment for helical milling with eccentricity automatic adjustment function, or other processing equipment that can drive the tool to realize the motion required by the present disclosure.

6. The method according to claim 4, wherein the tool feeds to the outlet side along a helical path while it rotates at a high speed.

7. The method according to claim 1, wherein before step S5, the tool helically mills with forward feeding from the inlet side, to obtain a hole with an aperture *D*, a hole depth *H1* and coaxial with the pre-processing hole, and feeds forward after the eccentricity of the tool is reduced, until the back-end cutting section of the cutting portion of the tool extends out of the outlet side; wherein, *H1<H, H* is the hole depth of the through-hole; and
step S5 comprises the following steps:
adjusting the eccentricity of the tool one or more times, helically milling with backward feeding from the outlet side, processing a hole with an aperture *D*, a hole depth *H-H1* and coaxial with the pre-processing hole, to obtain the through-hole to-be-processed; wherein the front-end cutting section of the cutting portion of the tool is the end milling structure

## Patentansprüche

1. Verfahren zum Spiralfräsen mit Vorwärts-Rückwärts-Vorschub, das die folgenden Schritte umfasst:
S1. Bestimmung einer Öffnung *D1* eines Vorbearbeitungslochs; .
S2. Auswahl eines geeigneten Werkzeugs entsprechend der endgültigen Öffnung *D* eines zu bearbeitenden Durchgangslochs und der Öffnung *D1* des Vorbearbeitungslochs;
S3. Spannen eines zu bearbeitenden Werkstücks und des Werkzeugs;
S4. Vorschieben des Werkzeugs, um das Vorbearbeitungsloch mit der Öffnung *D1* zu bearbeiten, und *D₁ <D*, bis ein hinterer Schneidabschnitt eines Schneidteils des Werkzeugs aus einer Auslassseite des Werkstücks herausragt; und
S5. ein- oder mehrmaliges Einstellen einer Exzentrizität des Werkzeugs, wobei von der Auslassseite aus rückwärts zugeführt wird, wobei der hintere Schneidabschnitt des Schneidteils des Werkzeugs verwendet wird, um ein schraubenförmiges Fräsen durchzuführen, wodurch ein Durchgangsloch mit einer Öffnung *D* erhalten wird, **dadurch gekennzeichnet, dass**
Bestimmen der Öffnung *D1* des Vorbearbeitungslochs in Schritt S1, umfassend: entsprechend der Öffnung *D* des zu bearbeitenden Durchgangslochs eine radiale einseitige maximale Breite *K* eines durch die Bearbeitung erforderlichen Schadensbereichs und eine radiale einseitige maximale Breite *K1* eines durch das Vorbearbeitungsloch erzeugten Schadensbereichs auf der Grundlage früherer Versuchsdaten und Produktionserfahrung, wobei D1 erfüllt: *D1<D*+*2*×*K-2*×*K1*, und der Wert von D1 wird entsprechend der tatsächlichen Situation bestimmt.

2. Verfahren nach Anspruch 1, wobei das Werkzeug in Schritt S2 einen Schneidabschnitt, einen Halsabschnitt und einen Griffabschnitt umfasst; der Schneidabschnitt einen Vorderend-Schneidabschnitt, einen Umfangs-Schneidabschnitt und einen Hinterend-Schneidabschnitt umfasst; der Vorderend-Schneidabschnitt eine Bohrer- oder Schaftfräserstruktur ist; wenn der Vorderend-Schneidabschnitt die Bohrerstruktur ist, ein Durchmesser *d* des Schneidabschnitts *d=D1* erfüllt; wenn der Vorderend-Schneidabschnitt die Schaftfräserstruktur ist, der Durchmesser *d* des Schneidabschnitts 0 erfüllt*.5D<d<D1*; ein Durchmesser *d0* des Halsabschnitts erfüllt *dO<d,* eine Länge *h* des Halsabschnitts erfüllt *h>H,* und *H* ist eine Lochtiefe des zu bearbeitenden Durchgangslochs.

3. Verfahren nach Anspruch 2, wobei Schritt S4 die folgenden Schritte umfasst:
wenn der vordere Schneidabschnitt des Schneidteils des Werkzeugs eine Bohrerstruktur ist, Einstellen des Werkzeugs koaxial mit dem zu bearbeitenden Durchgangsloch und Vorschieben, um das Vorbearbeitungsloch mit der Öffnung *D1* zu bearbeiten, bis der hintere Schneidabschnitt des Schneidteils des Werkzeugs aus der Auslassseite herausragt; und
wenn der vordere Schneidabschnitt des Schneidteils des Werkzeugs eine Fräsendstruktur ist, Einstellen der Exzentrizität *e1* des Werkzeugs auf *e1=(D1-d)*/*2*, Antreiben des Werkzeugs zum schraubenförmigen Fräsen mit Vorwärtsvorschub, um das Vorbearbeitungsloch mit der Öffnung *D1* von der Einlassseite bis zum hinteren Schneidabschnitt des Schneidteils des Werkzeugs zu bearbeiten, der sich aus der Auslassseite heraus erstreckt; wobei *d* ein Durchmesser des Schneidteils des Werkzeugs ist.

4. Verfahren nach Anspruch 3, wobei Schritt S5 die folgenden Schritte umfasst:
S51. wenn *D-Di<d-d0*, Einstellen der Exzentrizität e des Werkzeugs auf *e=(D-d)*/*2,* schraubenförmiges Fräsen mit Rückwärtsvorschub von der Auslassseite, um ein Loch mit einer Öffnung *D* und koaxial mit dem Vorbearbeitungsloch zu bearbeiten, um das zu bearbeitende Durchgangsloch zu erhalten; wobei *Di* eine Öffnung an der Auslassseite nach dem vorherigen schraubenförmigen Fräsen ist, *d* der Durchmesser des Schneidabschnitts des Werkzeugs ist, *d0* ein Durchmesser des Halsabschnitts des Werkzeugs ist, und *i* = 1, 2, 3, 4...;
wenn *D-Di≥d-d0*, Einstellen der Exzentrizität *e(i+ 1)* des Werkzeugs, um *ei<e(i+1)*<*ei*+*(d-d0)*/2 zu erfüllen, schraubenförmiges Fräsen mit Rückwärtsvorschub von der Auslassseite, um ein Durchgangsloch koaxial mit dem Vorbearbeitungsloch zu bearbeiten; und Einstellen der Exzentrizität auf *e0<e(i+ 1)* und Vorwärtsvorschub, um den hinteren Schneidabschnitt des Schneidteils des Werkzeugs aus der Auslassseite herausragen zu lassen; wobei *Di* die Öffnung an der Auslassseite nach dem vorherigen schraubenförmigen Fräsen ist, *d* der Durchmesser des Schneidabschnitts des Werkzeugs ist, *d0* der Durchmesser des Halsabschnitts des Werkzeugs ist, *e0* eine Exzentrizität ist, die erforderlich ist, damit sich der hintere Schneidabschnitt des Schneidabschnitts des Werkzeugs aus der Auslassseite heraus erstreckt, *ei* eine Exzentrizität des Werkzeugs ist, wenn die Öffnung am Auslass *Di* ist, *e(i+1)* eine Exzentrizität des Werkzeugs beim gegenwärtigen schraubenförmigen Fräsen ist, und *i* = 1, 2, 3, 4 ....; und
S52. Wiederholung von Schritt S51.

5. Verfahren nach Anspruch 1, wobei die Antriebsvorrichtung des Werkzeugs ein Bearbeitungszentrum oder eine spezielle Ausrüstung für das Spiralfräsen mit automatischer Exzentrizitätsanpassungsfunktion oder eine andere Bearbeitungsausrüstung ist, die das Werkzeug antreiben kann, um die durch die vorliegende Offenbarung geforderte Bewegung zu realisieren.

6. Verfahren nach Anspruch 4, bei dem das Werkzeug entlang einer schraubenförmigen Bahn zur Auslassseite transportiert wird, während es mit hoher Geschwindigkeit rotiert.

7. Verfahren nach Anspruch 1, wobei vor Schritt S5 das Werkzeug schraubenförmig mit Vorwärtsvorschub von der Einlassseite aus fräst, um ein Loch mit einer Öffnung *D*, einer Lochtiefe *H1* und koaxial mit dem Vorbearbeitungsloch zu erhalten, und vorwärts vorschiebt, nachdem die Exzentrizität des Werkzeugs verringert ist, bis sich der hintere Schneidabschnitt des Schneidteils des Werkzeugs aus der Auslassseite heraus erstreckt; wobei *H1<H*, *H* die Lochtiefe des Durchgangslochs ist; und
Schritt S5 umfasst die folgenden Schritte:
Einstellen der Exzentrizität des Werkzeugs ein oder mehrere Male, spiralförmiges Fräsen mit Rückwärtszuführung von der Auslassseite, Bearbeiten eines Lochs mit einer Öffnung *D*, einer Lochtiefe *H-H1* und koaxial mit dem Vorbearbeitungsloch, um das zu bearbeitende Durchgangsloch zu erhalten; wobei der vordere Schneidabschnitt des Schneidteils des Werkzeugs die Endfrässtruktur ist.

## Revendications

1. Méthode de fraisage hélicoïdal avec alimentation avant-arrière, comprenant les étapes
suivantes :
S1. déterminer une ouverture *D1* d'un trou de prétraitement; .
S2. sélection d'un outil approprié en fonction de l'ouverture finale *D* d'un trou traversant à traiter et de l'ouverture *D1* du trou de prétraitement ;
S3. serrage d'une pièce à usiner et de l'outil ;
S4. faire avancer l'outil pour traiter le trou de prétraitement avec l'ouverture *D1*, et *D₁ <D*, jusqu'à ce qu'une section de coupe arrière d'une partie de coupe de l'outil s'étende hors d'un côté de sortie de la pièce à usiner ; et
S5. réglage d'une ou plusieurs fois de l'excentricité de l'outil, alimentation vers l'arrière à partir du côté sortie, utilisation de la section de coupe arrière de la partie coupante de l'outil pour effectuer un fraisage hélicoïdal, obtention d'un trou traversant avec une ouverture *D*, **caractérisé par le fait que**
La détermination de l'ouverture *D1* du trou de prétraitement à l'étape S1 comprend : en fonction de l'ouverture *D* du trou traversant à traiter, une largeur maximale radiale unilatérale *K* d'une zone de dommage requise par le traitement, et une largeur maximale radiale unilatérale *K1* d'une zone de dommage produite par le trou de prétraitement sur la base de données d'expériences antérieures et de l'expérience de production, dans laquelle D1 est conforme à : *D1<D+2*×*K-2*×*K1*, et la valeur de D1 est déterminée en fonction de la situation réelle.

2. Le procédé selon la revendication 1, dans lequel l'outil à l'étape S2 comprend une partie de coupe, une partie de col et une partie de poignée ; la partie de coupe comprend une section de coupe avant, une section de coupe circonférentielle et une section de coupe arrière ; la section de coupe avant est une structure de trépan ou de broyeur en bout ; si la section de coupe avant est la structure de trépan, un diamètre *d* de la partie de coupe satisfait *d=D1* ; si la section de coupe avant est la structure de broyeur en bout, le diamètre *d* de la partie de coupe satisfait *0.5D<d<D1* ; un diamètre *d0* de la partie du col satisfait à *d0<d* ; une longueur *h* de la partie du col satisfait à *h>H*, et *H* est une profondeur de trou du trou traversant à traiter.

3. Méthode selon la revendication 2, dans laquelle l'étape S4 comprend les étapes suivantes :
si la section de coupe avant de la partie de coupe de l'outil est une structure de trépan, ajuster l'outil coaxial avec le trou de passage à traiter, et avancer pour traiter le trou de prétraitement avec l'ouverture *D1* jusqu'à ce que la section de coupe arrière de la partie de coupe de l'outil s'étende hors du côté de la sortie ; et
si la section de coupe avant de la partie coupante de l'outil est une structure d'extrémité de broyeur, ajuster l'excentricité *e1* de l'outil à *e1=(D1-d)*/*2*, conduire l'outil à fraiser de manière hélicoïdale avec une alimentation vers l'avant pour traiter le trou de prétraitement avec l'ouverture *D1* du côté de l'entrée jusqu'à la section de coupe arrière de la partie coupante de l'outil s'étendant hors du côté de la sortie ; dans lequel, *d* est un diamètre de la partie coupante de l'outil.

4. Méthode selon la revendication 3, dans laquelle l'étape S5 comprend les étapes suivantes :
S51. si *D-Di<d-d0*, réglage de l'excentricité e de l'outil à *e=(D-d)*/*2,* fraisage hélicoïdal avec avance arrière à partir du côté de la sortie pour traiter un trou d'ouverture *D* et coaxial avec le trou de prétraitement, afin d'obtenir le trou traversant à traiter ; dans lequel, *Di* est une ouverture du côté de la sortie après le fraisage hélicoïdal précédent, *d* est le diamètre de la partie coupante de l'outil, *d0* est un diamètre de la partie du col de l'outil, et *i* = 1, 2, 3, 4... ;
si *D-Di≥d-d0*, ajustement de l'excentricité *e(i+1*) de l'outil pour satisfaire *ei<e(i+1)<ei*+*(d-d0)*/*2*, fraisage hélicoïdal avec alimentation vers l'arrière à partir du côté de la sortie pour traiter un trou traversant coaxial avec le trou de prétraitement ; et ajustement de l'excentricité à *e0<e(i+1)* et alimentation vers l'avant pour que la section de coupe arrière de la partie coupante de l'outil s'étende à l'extérieur du côté de la sortie ; dans lequel, *Di* est l'ouverture du côté de la sortie après le fraisage hélicoïdal précédent, *d* est le diamètre de la partie coupante de l'outil, *d0* est le diamètre de la partie du col de l'outil, *e0* est une excentricité requise pour que la section de coupe arrière de la partie coupante de l'outil s'étende hors du côté de la sortie, *ei* est une excentricité de l'outil lorsque l'ouverture de la sortie est *Di*, *e(i+1)* est une excentricité de l'outil dans le fraisage hélicoïdal actuel, et *i* = 1, 2, 3, 4.... ; et
S52. Répéter l'étape S51.

5. La méthode selon la revendication 1, dans laquelle le dispositif d'entraînement de l'outil est un centre d'usinage, ou un équipement spécial pour le fraisage hélicoïdal avec une fonction de réglage automatique de l'excentricité, ou tout autre équipement de traitement qui peut entraîner l'outil pour réaliser le mouvement requis par la présente divulgation.

6. Méthode selon la revendication 4, dans laquelle l'outil se déplace vers le côté de sortie le long d'une trajectoire hélicoïdale alors qu'il tourne à grande vitesse.

7. Procédé selon la revendication 1, dans lequel, avant l'étape S5, l'outil fraise de manière hélicoïdale en avançant du côté de l'entrée, pour obtenir un trou avec une ouverture *D*, une profondeur de trou *H1* et coaxial avec le trou de prétraitement, et avance après que l'excentricité de l'outil est réduite, jusqu'à ce que la section de coupe arrière de la partie coupante de l'outil s'étende hors du côté de la sortie ; dans lequel, *H1<H*, *H* est la profondeur de trou de l'orifice traversant ; et
l'étape S5 comprend les étapes suivantes:
ajuster l'excentricité de l'outil une ou plusieurs fois, fraiser de manière hélicoïdale avec une alimentation vers l'arrière depuis le côté sortie, traiter un trou avec une ouverture *D*, une profondeur de trou *H-H1* et coaxial avec le trou de prétraitement, pour obtenir le trou traversant à traiter ; dans lequel la section de coupe frontale de la partie de coupe de l'outil est la structure de fraisage en bout.
